# EUROPEAN PATENT APPLICATION

(11) **EP 2 448 323 A1**
(43) Date of publication of application: **02.05.2012**
(21) Application number: 10792199.1
(22) Date of filing: 25.06.2010
(51) Int. Cl.: H04W 36/00, H04W 24/10, H04W 36/08

(54) **MOBILE COMMUNICATION METHOD, MOBILE STATION, AND RADIO BASE STATION**

(30) Priority: 26.06.2009 JP 2009153045
(71) Applicant: NTT DOCOMO, INC., Chiyoda-ku Tokyo 100-6150 (JP)
(72) Inventor: IWAMURA, Mikio, Tokyo 100-6150 (JP); UMESH, Anil, Tokyo 100-6150 (JP)
(74) Representative: HOFFMANN EITLE
(86) International application number: PCT/JP2010/060877
(87) International publication number: WO 2010/150881

(57) **Abstract**

A mobile communication method according to the present invention comprising a step in which a mobile station UE in communication with a first cell #A transmits a measurement report including the reception quality and the PCI of a second cell, the second cell being a neighbouring cell, to a radio base station eNB#A, which manages the first cell #A, a step in which, when it is determined that it is probable that PCI according to the received measurement report is used by a plurality of neighbouring cells, the radio base station managing the first cell notifies the mobile station of a predetermined gap and instructs the mobile station to notify the CGI of the second cell, and a step in which, when it is not possible to acquire the CGI of the second cell for the notified predetermined gap, the mobile station notifies that it is not possible to acquire the CGI.

## Description

### TECHNICAL FIELD

The present invention relates to a mobile communication method, a mobile station, and a radio base station.

### BACKGROUND ART

In a mobile communication system defined in the 3GPP, for example, an LTE (Long Term Evolution) mobile communication system, "PCI (Physical Cell Identity)" and "CGI (Cell Global Identity)" are used as identification information of each cell.

Furthermore, in the LTE mobile communication system, a "CSG cell" has been defined in which only a specific mobile station UE belonging to "CSG (Closed Subscriber Group)" can perform a standby operation or an access operation.

In the CSG cell, it is presumed that an added value is provided to the specific mobile station UE belonging to the CSG in terms of charging, a service, QoS (Quality of Service) and the like.

The CSG cell broadcasts "CSG-ID", and the mobile station UE holds a list of CSGs "Allowed CSG List" to which the mobile station UE can access. The mobile station UE can receive broadcast information on a cell detected through cell search, and determine whether to stand by in the cell and access the cell according to whether "CSG-ID" included in the broadcast information is included in the "Allowed CSG List".

Furthermore, in the LTE mobile communication system, it is presumed that a mobile station UE being connected measures neighbouring cells, transmits a "measurement report" related to the neighbouring cells to a radio base station, and a radio base station eNB, to which a mobile station is connected base on the report, performs handover control by determining the necessity of handover.

### SUMMARY OF THE INVENTION

### PROBLEMS TO BE SOLVED BY THE INVENTION

However, the "CGI" is identification information capable of uniquely specifying a cell in the mobile communication system according to the present embodiment, but the "PCI" corresponds to a scramble code in a WCDMA mobile communication system and is repeatedly used by a plurality of cells. That is, in the mobile communication system according to the present embodiment, it is not possible to uniquely specify a cell only by the "PCI".

Therefore, if a cell is designated only by the "PCI", it is probable that a cell recognized by a mobile station UE may be different from a cell recognized by a radio base station eNB at the time of a handover process and the like.

Therefore, the present invention has been achieved in view of the above-described problems, and an object thereof is to provide a mobile communication method capable of preventing a problem that a cell recognized by a mobile station UE is different from a cell recognized by a radio base station eNB, a mobile station, and a radio base station.

### MEANS FOR SOLVING THE PROBLEM

The first characteristic of the present embodiment is that a mobile communication method includes a step in which a mobile station in communication with a first cell transmits a measurement report including the reception quality of a second cell (a neighbouring cell) and the PCI of the second cell to a radio base station, which manages the first cell, a step in which, when it is determined that it is probable that PCI according to the received measurement report is used by a plurality of neighbouring cells, the radio base station managing the first cell notifies the mobile station of a predetermined gap and instructs the mobile station to notify the CGI of the second cell, and a step in which, when it is not possible to acquire the CGI of the second cell for the notified predetermined gap, the mobile station notifies that it is not possible to acquire the CGI.

The second characteristic of the present embodiment is that a mobile communication method includes a step in which a mobile station in communication with a first cell transmits a measurement report including the reception quality of a second cell (a neighbouring cell) and the PCI of the second cell to a radio base station, which manages the first cell, a step in which, when it is determined that it is probable that PCI according to the received measurement report is used by a plurality of neighbouring cells, the radio base station managing the first cell notifies the mobile station of a predetermined gap and a predetermined interval and instructs the mobile station to notify the CGI of the second cell, and a step in which, when it is not possible to acquire the CGI of the second cell within the notified predetermined interval, the mobile station notifies that it is not possible to acquire the CGI.

The third characteristic of the present embodiment is that a mobile communication method includes a step in which a mobile station in communication with a first cell transmits a measurement report including the reception quality of a second cell (a neighbouring cell) and the PCI of the second cell to a radio base station, which manages the first cell, a step in which, when it is determined that it is probable that PCI according to the received measurement report is used by a plurality of neighbouring cells, the radio base station managing the first cell notifies the mobile station of a predetermined gap and a predetermined interval and instructs the mobile station to notify the CGI of the second cell, and a step in which, when a measurement report including the CGI of the second cell is not received from the mobile station within the predetermined interval after the instruction, the radio base station managing the first cell performs a predetermined process for reducing interference to the second cell.

The fourth characteristic of the present embodiment is that a mobile communication method includes a step in which a mobile station in communication with a first cell periodically transmits a measurement report including the reception quality of a second cell (a neighbouring cell) and the PCI of the seond cell to a radio base station, which manages the first cell, a step in which, when it is determined that it is probable that PCI according to the received measurement report is used by a plurality of neighbouring cells, the radio base station managing the first cell notifies the mobile station of a predetermined gap and instructs the mobile station to notify the CGI of the second cell, and a step in which, when a measurement report including the PCI of the second cell is received from the mobile station before a measurement report including the CGI of the second cell is received after the instruction, the radio base station managing the first cell performs a predetermined process for reducing interference to the second cell.

The fifth characteristic of the present embodiment is that a mobile communication method includes a step in which, when reception quality of a second cell (a neighbouring cell) satisfies a first reporting condition, a mobile station in communication with a first cell transmits a first measurement report including the reception quality and the PCI of the second cell to a radio base station, which manages the first cell, a step in which, when the reception quality of the second cell satisfies a second reporting condition, the mobile station transmits a second measurement report including the reception quality and the PCI of the second cell to the radio base station, which manages the first cell, a step in which, when the first measurement report is received, the radio base station managing the first cell notifies the mobile station of a predetermined gap and instructs the mobile station to notify CGI of the second cell, and a step in which, when the second measurement report is received, the radio base station managing the first cell performs a predetermined process for reducing interference to the second cell.

The sixth characteristic of the present embodiment is that a mobile station includes a measurement report transmission unit configured to transmit a measurement report including reception quality and the PCI of a second cell (a neighbouring cell) to a radio base station, which manages a first cell in communication, and a notification unit configured to, when a predetermined gap has been notified by the radio base station managing the first cell and then it is not possible to acquire the CGI of the second cell by the predetermined gap, notify the radio base station managing the first cell that it is not possible to acquire the CGI.

The seventh characteristic of the present embodiment is that a mobile station includes a measurement report transmission unit configured to transmit a measurement report including reception quality and the PCI of a second cell to a radio base station, which manages a first cell in communication, and a notification unit configured to, when a predetermined gap and a predetermined interval have been notified by the radio base station managing the first cell and then it is not possible to acquire the CGI of the second cell within the predetermined interval, notify the radio base station managing the first cell that it is not possible to acquire the CGI.

The eighth characteristic of the present embodiment is that a radio base station managing the first cell includes an instruction unit configured to, when a measurement report including reception quality and the PCI of a second cell (a neighbouring cell) is transmitted by a mobile station in communication with the first cell and it is determined that it is probable that PCI according to the measurement report is used by a plurality of neighbouring cells, notify the mobile station of a predetermined gap and instruct the mobile station to notify CGI of the second cell, and an execution unit configured to, when a notification of a failure of acquisition of the CGI of the second cell by the predetermined gap is received from the mobile station, perform a predetermined process for reducing interference to the second cell.

The ninth characteristic of the present embodiment is that a radio base station managing the first cell includes an instruction unit configured to, when a measurement report including reception quality and the PCI of a second cell (a neighbouring cell) is transmitted by a mobile station in communication with the first cell and it is determined that it is probable that PCI according to the measurement report is used by a plurality of neighbouring cells, notify the mobile station of a predetermined gap and a predetermined interval and instruct the mobile station to notify CGI of the second cell, and an execution unit configured to, when a notification of a failure of acquisition of the CGI of the second cell within the predetermined interval is received from the mobile station, perform a predetermined process for reducing interference to the second cell.

The tenth characteristic of the present embodiment is that a radio base station managing the first cell includes an instruction unit configured to, when a measurement report including reception quality and the PCI of a second cell (a neighbouring cell) is transmitted by a mobile station in communication with the first cell and it is determined that it is probable that PCI according to the measurement report is used by a plurality of neighbouring cells, notify the mobile station of a predetermined gap and a predetermined interval and instruct the mobile station to notify CGI of the second cell, and an execution unit configured to, when a measurement report including CGI of the second cell is not received from the mobile station within a predetermined interval after the instruction, perform a predetermined process for reducing interference to the second cell.

The eleventh characteristic of the present embodiment is that a radio base station managing the first cell includes an instruction unit configured to, when a measurement report including reception quality and the PCI of a second cell (a neighbouring cell) is periodically transmitted by a mobile station in communication with the first cell and it is determined that it is probable that PCI according to the measurement report is used by a plurality of neighbouring cells, notify the mobile station of a predetermined gap and instruct the mobile station to notify CGI of the second cell, and an execution unit configured to, when a measurement report including the PCI of the second cell is received from the mobile station before a measurement report including the CGI of the second cell is received after the instruction, perform a predetermined process for reducing interference to the second cell.

The twelfth characteristic of the present embodiment is that a radio base station managing the first cell includes an instruction unit configured to, when it is determined that reception quality of a second cell (a neighbouring cell) satisfies a first reporting condition and a first measurement report including the reception quality and the PCI of the second cell is transmitted by a mobile station in communication with the first cell, notify the mobile station of a predetermined gap and instruct the mobile station to notify CGI of the second cell, and an execution unit configured to, when it is determined that the reception quality of the second cell satisfies a second reporting condition and a second measurement report including the reception quality of the second cell is transmitted by the mobile station, perform a predetermined process for reducing interference to the second cell.

### EFFECT OF THE INVENTION

As described above, according to the present invention, it is possible to provide a mobile communication method capable of preventing a problem that a cell recognized by a mobile station UE is different from a cell recognized by a radio base station eNB, a mobile station, and a radio base station.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present invention.
[Fig. 4] Fig. 4 is a flowchart illustrating the operation of a mobile communication system according to the first embodiment of the present invention.
[Fig. 5] Fig. 5 is a flowchart illustrating the operation of a mobile communication system according to the first embodiment of the present invention.

### BEST MODES FOR CARRYING OUT THE INVENTION

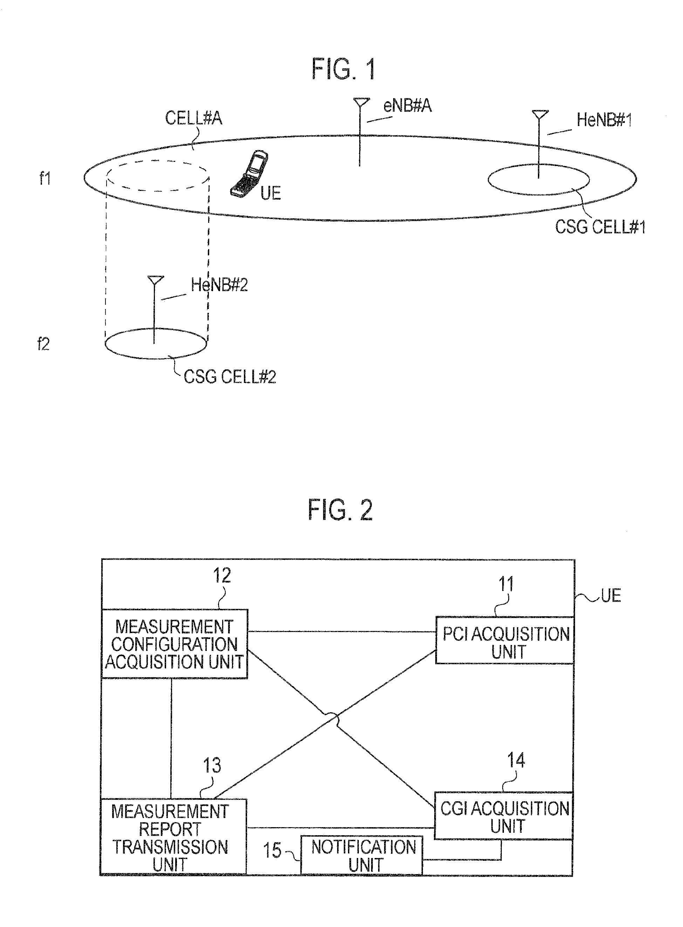

(Configuration of mobile communication system according to first embodiment of present invention)
With reference to Fig. 1 through Fig. 3, the configuration of a mobile communication system according to a first embodiment of the present invention will be explained.

As illustrated in Fig. 1, the mobile communication system according to the present embodiment is an LTE mobile communication system, and includes a radio base station eNB#A managing a cell #A, a radio base station HeNB#l managing a CSG cell #1, a radio base station HeNB#2 managing a CSG cell #2, and the like.

A coverage area of the CSG cell #1 and a coverage area of the cell#A overlap at least in part, and a frequency f1 used by the CSG cell #1 is the same as a frequency f1 used by the cell#A.

Furthermore, a coverage area of the CSG cell #2 and a coverage area of the cell#A overlap at least in part, and a frequency f2 used by the CSG cell #2 is different from the frequency f1 used by the cell#A.

Here, the cell#A may also be a "CSG cell", an "Open cell", or a "Hybrid cell".

The "Open cell" denotes a cell in/to which all mobile stations UEs in the mobile communication system according to the present embodiment can stand by and access.

Furthermore, the "Hybrid cell" is regarded as the "CSG cell" by a mobile station UE belonging to the CSG and is regarded as the "Open cell" by a mobile station UE not belonging to the CSG. In the "Hybrid cell", it is presumed that an added value is provided to the mobile station UE belonging to the CSG in terms of charging, a service, QoS (Quality of Service) and the like.

In addition, in the CSG cell, "csg-Indicator" = "TRUE" is set and "CSG-ID (csg-Identity)" is set in SIB (System Information Block) 1 which is broadcast information of the CSG cell.

Furthermore, in the Hybrid cell, the "csg-Indicator" = "FALSE" is set and "CSG-ID" is set in the SIB1.

Here, a mobile station UE corresponding to the Release-8 of the 3GPP recognizes the Hybrid cell as the Open cell.

Furthermore, instead of the CSG cell #1 and the CSG cell #2, a cell#1 and a cell#2, which are the Hybrid cell or the Open cell, may also be used.

As illustrated in Fig. 2, the mobile station UE includes a PCI acquisition unit 11, a measurement configuration acquisition unit 12, a measurement report transmission unit 13, a CGI acquisition unit 14, and a notification unit 15.

The PCI acquisition unit 11 is configured to acquire PCI (Physical Cell Identity) of a neighbouring cell through cell search.

The measurement configuration acquisition unit 12 is configured to acquire a "Measurement Configuration" for each cell.

Here, the "Measurement Configuration" may include a "Measurement Object", a "Reporting Configuration", a "Measurement ID" for allowing the "Measurement Object" to correspond to the "Reporting Configuration", a "Measurement Gap" for performing measurement in different frequency cells and different RAT (Radio Access Technology) cells, a measurement quantity (e.g., RSRP or RSRQ), a "Quantity Configuration" for designating L3 filtering, and the like.

The "Measurement Object" includes information on a frequency / RAT to be measured by the mobile station UE, offset for a specific cell (PCI), a list of specific cells to be excluded from measurement, and the like.

Furthermore, the "Reporting Configuration" includes information on a parameter for designating an event by which the mobile station UE should transmit a "Measurement Report" to the radio base station eNB, for example, an event type, a threshold value for reception quality, a reporting periodicity and the like.

For example, when the PCI acquisition unit 11 determines to measure the CSG cell#2 (the second cell) using a frequency f2 different from the frequency f1 of the cell#A (the first cell) with which the mobile station UE is communicating, and when the measurement configuration acquisition unit 12 does not hold a "Measurement Configuration" for the frequency f2 of the CSG cell#2, the measurement configuration acquisition unit 12 is configured to transmit a "Measurement Configuration Request" to the radio base station eNB#A managing the cell #A, thereby acquiring the "Measurement Configuration" for the frequency f2 of the CSG cell#2 from the radio base station eNB#A.

The "Measurement Configuration" for the frequency f2 of the CSG cell#2 includes a "Measurement Object", a "Reporting Configuration", a "Measurement ID", a "Measurement Gap" and the like related to the frequency f2.

Here, the mobile station UE, for example, can store a neighbouring environment (e.g., PCI, reception quality, position information and the like of a neighbouring cell) of an accessible CSG cell, determine whether it is staying around the accessible CSG cell based on the neighbouring environment, and determine whether to measure the CSG cell.

Otherwise, the mobile station UE, for example, can store PLMN or a frequency of an accessible CSG cell, and determine whether to measure the CSG cell based on the PLMN or the frequency.

The measurement report transmission unit 13 is configured to transmit a "Measurement Report" including the reception quality (reception quality corresponding to a measurement index) and the "PCI" of a cell of a measurement object which is included in the measurement configuration according to the measurement configuration acquired by the measurement configuration acquisition unit 12.

For example, the measurement report transmission unit 13 is configured to transmit a measurement report including the reception quality and the "PCI" of the CSG cell#2 to the radio base station eNB#A according to the measurement configuration for the frequency f2 of the CSG cell#2 acquired by the measurement configuration acquisition unit 12.

Furthermore, a plurality of "Measurement IDs" and "Reporting Configurations" may be set to one "Measurement Object".

For example, a first reporting condition and a second reporting condition may also be set to the CSG cell#l and the CSG cell#2, wherein the first reporting condition is "the reception quality of a neighbouring cell> the reception quality + 1 dB of a cell (a serving cell) in communication", and the second reporting condition is "the reception quality of the neighbouring cell > the reception quality + 3 dB of the cell (the serving cell) in communication".

When it is determined that the reception quality of the CSG cell#1 or the CSG cell#2 satisfies the first reporting condition, the measurement report transmission unit 13 may transmit a first measurement report. When it is determined that the reception quality of the CSG cell#1 or the CSG cell#2 satisfies the second reporting condition, the measurement report transmission unit 13 may be configured to transmit a second measurement report.

The CGI acquisition unit 14 is configured to acquire "CGI (Cell Global Identity)" included in the SIB1 of each cell using the measurement gap included in the measurement configuration. In addition, the CGI acquisition unit 14 may simultaneously acquire "CSG-ID" of each cell included in the SIB1.

Here, the "CGI" is identification information capable of uniquely specifying a cell in the mobile communication system according to the present embodiment, but the "PCI (Physical Cell Identity)" corresponds to a scramble code in a WCDMA mobile communication system and is repeatedly used by a plurality of cells. That is, in the mobile communication system according to the present embodiment, it is not possible to uniquely specify a cell only by the "PCI".

In the mobile communication system according to the present embodiment, it is assumed that 504 "PCIs" may exist.

Furthermore, if a cell is detected in a cell search step, it is possible for the mobile station UE to designate the cell by the "PCI". However, since the "CGI" and the "CSG-ID" are included in broadcast information, if the broadcast information is not received, it is not possible for the mobile station UE to acquire the "CGI" and the "CSG-ID". In order for the mobile station UE to receive broadcast information of a neighbouring cell during communication, it is necessary to temporarily interrupt communication with the cell in communication for a short interval (an interval sufficient for receiving the broadcast information, for example, 80 ms), which is called a "predetermined gap".

Basically, in order for the mobile station UE to search and measure a cell using a frequency different from a frequency used by a cell in communication, a "Measurement Gap" is required. The "Measurement Gap" may be shorter than the predetermined gap required for receiving the broadcast information. However, a periodical measurement gap for performing sufficient averaging of measurement is required (e.g., a measurement gap of 5 ms with a cycle of 40 ms).

After a predetermined gap has been notified from the radio base station eNB#A, when it is not possible to acquire the CGI of the CSG cell#1 or the CSG cell#2 for the predetermined gap, the notification unit 15 is configured to notify the radio base station eNB#A that it is not possible to acquire the CGI.

For example, after one or a plurality of predetermined gaps of about 80 ms has been notified from the radio base station eNB#A, when it is not possible to acquire the CGI of the CSG cell#1 or the CSG cell#2 by the predetermined gaps, the notification unit 15 is configured to notify the radio base station eNB#A that it is not possible to acquire the CGI.

Otherwise, after a predetermined gap and a predetermined interval have been notified from the radio base station eNB#A, when it is not possible to acquire the CGI of the CSG cell#1 or the CSG cell#2 within the predetermined interval, the notification unit 15 is configured to notify the radio base station eNB#A that it is not possible to acquire the CGI.

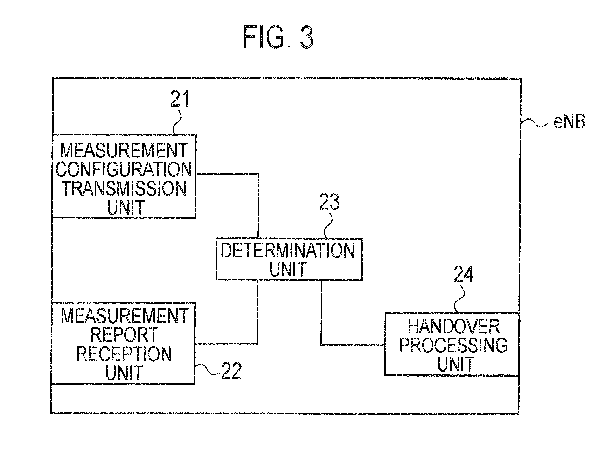

As illustrated in Fig. 3, the radio base station eNB includes a measurement configuration transmission unit 21, a measurement report reception unit 22, a determination unit 23, and a handover processing unit 24.

The measurement configuration transmission unit 21 is configured to transmit a corresponding measurement configuration to the mobile station UE according to the measurement configuration request received from the mobile station UE.

The measurement report reception unit 22 is configured to receive the measurement report transmitted by the mobile station UE according to the measurement configuration.

When the measurement report including the reception quality of the CSG cell is received from the mobile station UE, the determination unit 23 is configured to determine whether the mobile station UE is accessible to the CSG cell and the reception quality of the CSG cell#2 included in the measurement report satisfies predetermined conditions.

In such a case, the determination unit 23 is configured to determine whether it is probable that the PCI of the CSG cell included in the measurement report is used by a plurality of neighbouring cells (it is probable that "PCI Confusion" occurs).

For example, when the PCI is managed by dividing the PCI into PCI for the CSG cell, PCI for the Hybrid cell, and PCI for the Open cell and the PCI of the CSG cell included in the measurement report is not the PCI for the CSG cell, the determination unit 23 may also be configured to determine that it is probable that the PCI of the CSG cell included in the measurement report is used by the plurality of neighbouring cells.

Otherwise, when the PCI is managed by dividing the PCI into PCI with the possibility of the occurrence of the "PCI Confusion" and PCI with no possibility of the occurrence of the "PCI Confusion" and the PCI of the CSG cell included in the measurement report is the PCI with the possibility of the occurrence of the "PCI Confusion", the determination unit 23 may also be configured to determine that it is probable that the PCI of the CSG cell included in the measurement report is used by a plurality of neighbouring cells.

The handover processing unit 24 is configured to perform a handover process of the corresponding mobile station UE according to the determination result of the determination unit 23.

For example, when the mobile station UE is accessible to the CSG cell#2 and it is determined that the reception quality of the CSG cell#1 or the CSG cell#2 included in the measurement report received from the mobile station UE satisfies the predetermined conditions, the determination unit 23 may also be configured to start the handover process of the mobile station UE to the CSG cell#1 or the CSG cell#2.

Furthermore, when the determination unit 23 has determined that it is probable that the PCI of the CSG cell#2 included in the measurement report received from the mobile station UE is used by a plurality of neighbouring cells, the measurement configuration transmission unit 21 may be configured to notify the mobile station UE of the predetermined gap and instruct the mobile station UE to notify the CGI of the CSG cell#2.

In addition, in the present embodiment, the determination unit 23 has been described as a part of the functions of the radio base station eNB. However, the determination unit 23 may also exist in other network nodes. For example, the determination unit 23 may also be located in a mobile switching center MME (Mobility Management Entity) or a gateway device (HeNB-GW), which is an upper node, and the like.

Furthermore, a part of the functions of the determination unit 23, for example, only a function of determining an access right of the mobile station UE for the CSG cell, may also be provided in the upper node. In such a case, the radio base station eNB sends a query to the upper node as to whether the mobile station UE is accessible to the CSG cell#2.

Furthermore, a configuration of providing the function of determining the access right to the upper node is advantageous in that it is not necessary for the radio base station eNB to hold the "Allowed CSG List" of the mobile station UE. When the "Allowed CSG List" is held by the radio base station eNB, security risk exists.

Furthermore, when a notification of a failure of the acquisition of the CGI of the CSG cell#1 or the CSG cell#2 by the predetermined gap is received from the mobile station UE, the handover processing unit 24 is configured to perform a predetermined process for reducing interference to the CSG cell#1 or the CSG cell#2.

In the same manner, when the notification of the failure of the acquisition of the CGI of the CSG cell#1 or the CSG cell#2 within the predetermined interval is received from the mobile station UE, the handover processing unit 24 may be also configured to perform the predetermined process for reducing terference to the CSG cell#1 or the CSG cell#2.

Furthermore, after the measurement configuration transmission unit 21 notifies the mobile station UE of the predetermined gap and instructs the mobile station UE to notify the CGI of the CSG cell#2, when the measurement report including the CGI of the CSG cell#1 or the CSG cell#2 is not received from the mobile station UE within the predetermined interval, the handover processing unit 24 may be also configured to perform the predetermined process for reducing interference to the CSG cell#1 or the CSG cell#2.

Furthermore, in the case in which the mobile station UE periodically transmits the measurement report including the reception quality and the PCI of the CSG cell#1 or the CSG cell#2, which is a neighbouring cell (i.e., when "event triggered periodical reporting" is applied to the mobile station UE), after the measurement configuration transmission unit 21 notifies the mobile station UE of the predetermined gap and instructs the mobile station UE to notify the CGI of the CSG cell#2, when the measurement report including the PCI of the CSG cell#l or the CSG cell#2 is received from the mobile station UE before the measurement report including the CGI of the CSG cell#1 or the CSG cell#2 is received, the handover processing unit 24 may be also configured to perform the predetermined process for reducing interference to the CSG cell#1 or the CSG cell#2.

Furthermore, when it is determined that the reception quality of the CSG cell#1 or the CSG cell#2 satisfies the first reporting condition and the first measurement report including the reception quality of the CSG cell#1 or the CSG cell#2 is transmitted by the mobile station UE, the measurement configuration transmission unit 21 may be also configured to notify the mobile station UE of the predetermined gap and instruct the mobile station UE to notify the CGI of the CSG cell#1 and the CSG cell#2.

Meanwhile, when it is determined that the reception quality of the CSG cell#1 or the CSG cell#2 satisfies the second reporting condition and the second measurement report including the reception quality of the CSG cell#1 or the CSG cell#2 is transmitted by the mobile station UE, the handover processing unit 24 may be also configured to perform the predetermined process for reducing interference to the CSG cell#1 or the CSG cell#2.

Specifically, the handover processing unit 24 may also perform a handover process or a redirection process of the mobile station UE to a cell using a frequency or RAT, which is different from that of the CSG cell#1 or the CSG cell#2, as the predetermined process for reducing interference to the CSG cell#1 or the CSG cell#2.

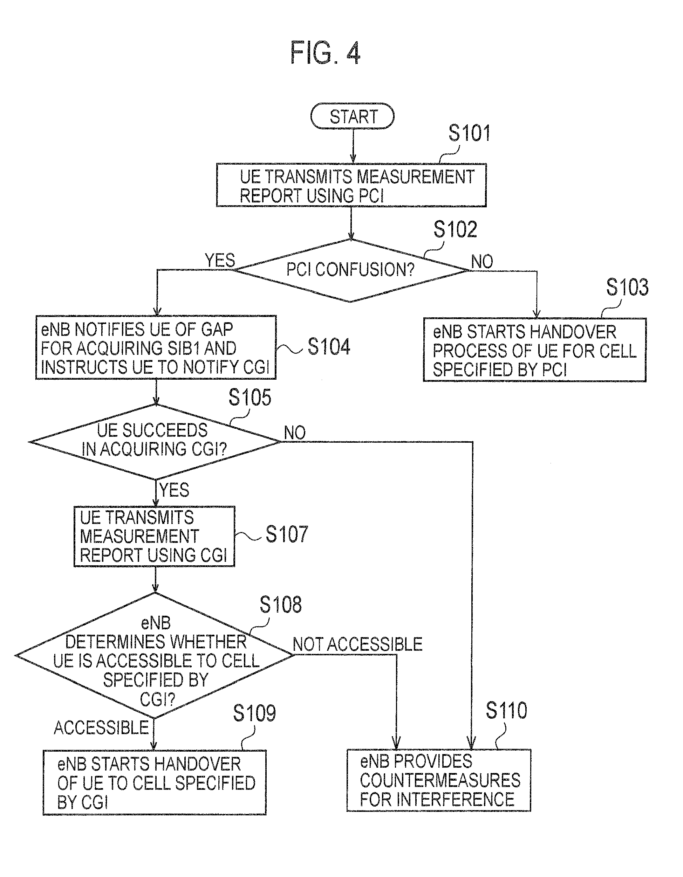

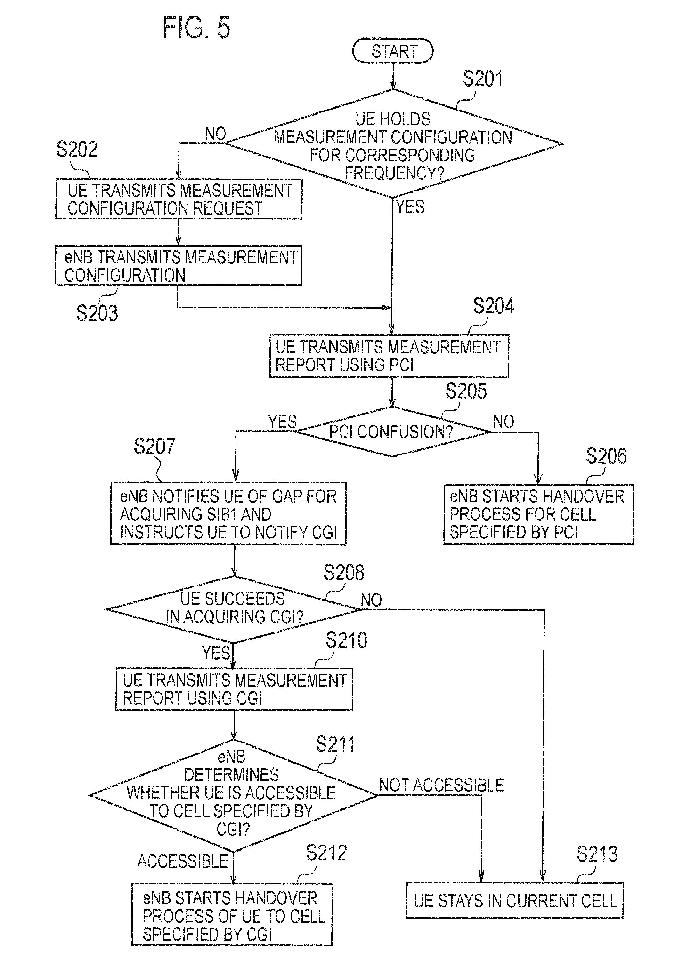

(Operation of mobile communication system according to first embodiment of present invention)
Hereinafter, with reference to Fig. 4 and Fig. 5, the operation of the mobile communication system according to the first embodiment of the present invention will be explained.

Firstly, with reference to Fig. 4, an operation when the mobile station UE measures the CSG cell#1 using the same frequency f1 as the cell#A in communication will be explained.

As illustrated in Fig. 4, in step S101, the mobile station UE transmits a measurement report including the reception quality and the PCI of the CSG cell#1 to the radio base station eNB#A.

In step S102, the radio base station eNB#A determines whether it is probable that the PCI of the CSG cell#1 according to the received measurement report is used by a plurality of neighbouring cells, that is, it is probable that the "PCI Confusion" occurs for PCI of the CSG cell#1 in the received measurement report.

When it is determined that it is less probable that the "PCI Confusion" occurs, the present procedure proceeds to step S103. When it is determined that it is probable that the "PCI Confusion" occurs, the present procedure proceeds to step S104.

In step S103, the radio base station eNB#A starts a handover process of the mobile station UE to a cell (the CSG cell#1) designated by the PCI.

In step S104, the radio base station eNB#A notifies the mobile station UE of a predetermined gap (a gap for acquiring the SIB1) and instructs the mobile station UE to notify the CGI of the CSG cell#2.

In step S105, the radio base station eNB#A determines whether the mobile station UE has succeeded in acquiring the CGI of the CSG cell#1 .

Here, when a notification of a failure of the acquisition of the CGI of the CSG cell#1 or the CSG cell#2 is received from the mobile station UE, the radio base station eNB#A may also determine that the mobile station UE has failed to acquire the CGI of the CSG cell#1.

Furthermore, after the radio base station eNB#A notifies the mobile station UE of the predetermined gap and instructs the mobile station UE to notify the CGI of the CSG cell#2, when the measurement report including the CGI of the CSG cell#1 or the CSG cell#2 is not received from the mobile station UE within a predetermined interval, the radio base station eNB#A may also determine that the mobile station UE has failed to acquire the CGI of the CSG cell#1.

Furthermore, in the case in which the "event triggered periodical reporting" is applied to the mobile station UE, after the radio base station eNB#A notifies the mobile station UE of the predetermined gap and instructs the mobile station UE to notify the CGI of the CSG cell#2, when the measurement report including the PCI of the CSG cell#1 or the CSG cell#2 is received from the mobile station UE before the measurement report including the CGI of the CSG cell#1 or the CSG cell#2 is received, the radio base station eNB#A may also determine that the mobile station UE has failed to acquire the CGI of the CSG cell#1.

Furthermore, when it is determined that the reception quality of the CSG cell#1 or the CSG cell#2 satisfies the second reporting condition and the second measurement report including the reception quality of the CSG cell#1 or the CSG cell#2 is transmitted by the mobile station UE, the radio base station eNB#A may also determine that the mobile station UE has failed to acquire the CGI of the CSG cell#1 .

When it is determined that the mobile station UE has succeeded in acquiring the CGI of the CSG cell#1, the present procedure proceeds to step S107. When it is determined that the mobile station UE has failed to acquire the CGI of the CSG cell#1, the present procedure proceeds to step S110.

In step S107, the mobile station UE transmits the measurement report including the reception quality of the CSG cell#1 to the radio base station eNB#A using the acquired CGI of the CSG cell#1.

In step S108, the radio base station eNB#A determines whether the mobile station UE is accessible to the cell (the CSG cell#1) designated by the CGI of the CSG cell#1 according to the received measurement report.

In addition, the above determination may also be performed by the upper node. In such a case, the radio base station eNB#A sends a query to the upper node as to whether the mobile station UE is accessible to the cell (the CSG cell#1) designated by the CGI of the CSG cell#1.

When it is determined that the mobile station UE is accessible to the cell, the radio base station eNB#A starts a handover process of the mobile station UE to the cell (the CSG cell#1) designated by the CGI, in step S109.

Meanwhile, when it is determined that the mobile station UE is not accessible to the cell, the radio base station eNB#A performs a handover process or a redirection process of the mobile station UE to a cell using a frequency or RAT, which is different from that of the cell#A, in step S110.

In step S211, the radio base station eNB#A provides countermeasures for interference in consideration of the probability that communication between the mobile station UE and the cell#A causes interference in the CSG cell#1.

Secondly, with reference to Fig. 5, an operation when the mobile station UE measures the CSG cell#2 using a frequency f2 different from the frequency f1 of the cell#A in communication will be explained.

As illustrated in Fig. 5, when it is determined to measure the CSG cell#2 using the frequency f2 different from the frequency f1 of the cell#A in communication, the mobile station UE determines whether it has a measurement configuration for the frequency f2 of the CSG cell#2 in step S201.

When it is determined that the mobile station UE has the measurement configuration for the frequency f2 of the CSG cell#2, the procedure proceeds to step S204. When it is determined that the mobile station UE does not have the measurement configuration for the frequency f2 of the CSG cell#2, the procedure proceeds to step S202.

In step S202, the mobile station UE transmits a measurement configuration request for the measurement configuration for the frequency f2 of the CSG cell#2 to the radio base station eNB#A managing the cell #A. The measurement request may include information on the frequency f2, a radio access technology RAT (LTE, UTRA, GERAN and the like) and the like, to be measured by the mobile station UE.

In step S203, the radio base station eNB#A transmits the measurement configuration for the frequency f2 of the CSG cell#2 to the mobile station UE. The measurement configuration may include information on a "Measurement Object (RAT and a frequency)", a "Reporting Configuration", a "Measurement ID" for linking the "Measurement Object" to the "Reporting Configuration", a "Measurement Gap" and the like. Furthermore, the radio base station eNB#A may also transmit a measurement configuration to the mobile station UE to newly configure only elements of the measurement configuration which are not yet configured.

The operations from step S204 to S212 are the same as the operations from step S101 to S109 illustrated in Fig. 4.

In step S213, the radio base station eNB#A does not start a handover process of the mobile station UE to a cell (the CSG cell#2) designated by the CGI, and continues to communicate with the cell#A in communication.

(Operation and effect of mobile communication system according to first embodiment of present invention)
In accordance with the mobile communication system according to the first embodiment of the present invention, it is possible to prevent a problem that a cell recognized by a mobile station UE is different from a cell recognized by a radio base station eNB at the time of a handover process.

The characteristics of the present embodiment described above may also be represented as follows.

The first characteristic of the present embodiment is that a mobile communication method includes a step in which a mobile station UE in communication with a cell#A (a first cell) transmits a measurement report including the reception quality and the PCI of a CSG cell#1 or a CSG cell#2 (a second cell), which is a neighbouring cell, to a radio base station eNB#A, which manages the cell#A, a step in which, when it is determined that it is probable that PCI according to the received measurement report is used by a plurality of neighbouring cells, the radio base station eNB#A notifies the mobile station UE of a predetermined gap and instructs the mobile station UE to notify the CGI of the CSG cell#1 or the CSG cell#2, and a step in which, when it is not possible to acquire the CGI of the CSG cell#1 or the CSG cell#2 by the notified predetermined gap, the mobile station UE notifies that it is not possible to acquire the CGI.

The second characteristic of the present embodiment is that a mobile communication method includes a step in which a mobile station UE in communication with a cell#A transmits a measurement report including the reception quality and the PCI of a CSG cell#1 or a CSG cell#2, which is a neighbouring cell, to a radio base station eNB#A, which manages the cell#A, a step in which, when it is determined that it is probable that PCI according to the received measurement report is used by a plurality of neighbouring cells, the radio base station eNB#A notifies the mobile station UE of a predetermined gap and a predetermined interval and instructs the mobile station UE to notify the CGI of the CSG cell#1 or the CSG cell#2, and a step in which, when it is not possible to acquire the CGI of the CSG cell#1 or the CSG cell#2 within the notified predetermined interval, the mobile station UE notifies that it is not possible to acquire the CGI.

In the first or second characteristic of the present embodiment, the mobile communication method may further include a step in which the radio base station eNB#A performs a predetermined process for reducing interference to the CSG cell#1 or the CSG cell#2 in response to the notification from the mobile station UE.

The third characteristic of the present embodiment is that a mobile communication method includes a step in which a mobile station UE in communication with a cell#A transmits a measurement report including the reception quality and the PCI of a CSG cell#1 or a CSG cell#2, which is a neighbouring cell, to a radio base station eNB#A, which manages the cell#A, a step in which, when it is determined that it is probable that PCI according to the received measurement report is used by a plurality of neighbouring cells, the radio base station eNB#A notifies the mobile station UE of a predetermined gap and a predetermined interval and instructs the mobile station UE to notify the CGI of the CSG cell#1 or the CSG cell#2, and a step in which, when the measurement report including the CGI of the CSG cell#1 or the CSG cell#2 is not received from the mobile station UE within the predetermined interval after the instruction, the radio base station eNB#A performs a predetermined process for reducing the influence of interference to the CSG cell#1 or the CSG cell#2.

The fourth characteristic of the present embodiment is that a mobile communication method includes a step in which a mobile station UE in communication with a cell#A periodically transmits a measurement report including the reception quality and the PCI of a CSG cell#1 or a CSG cell#2, which is a neighbouring cell, to a radio base station eNB#A, which manages the cell#A, a step in which, when it is determined that it is probable that PCI according to the received measurement report is used by a plurality of neighbouring cells, the radio base station eNB#A notifies the mobile station of a predetermined gap and instructs the mobile station UE to notify the CGI of the CSG cell#1 or the CSG cell#2, and a step in which, when the measurement report including the PCI of the CSG cell#1 or the CSG cell#2 is received from the mobile station UE before the measurement report including the CGI of the CSG cell#1 or the CSG cell#2 is received after the instruction, the radio base station eNB#A performs a predetermined process for reducing interference to the CSG cell#1 or the CSG cell#2.

The fifth characteristic of the present embodiment is that a mobile communication method includes a step in which, when the reception quality of a CSG cell#1 or a CSG cell#2, which is a neighbouring cell, satisfies a first reporting condition, a mobile station UE in communication with a cell#A transmits a first measurement report including the reception quality and the PCI of the CSG cell#1 or the CSG cell#2 to a radio base station eNB#A, which manages a cell#A, a step in which, when the reception quality of the CSG cell#1 or the CSG cell#2 satisfies a second reporting condition, the mobile station UE transmits a second measurement report including the reception quality and the PCI of the CSG cell#1 or the CSG cell#2 to the radio base station eNB#A, a step in which, when the first measurement report is received, the radio base station eNB#A notifies the mobile station UE of a predetermined gap and instructs the mobile station UE to notify the CGI of the CSG cell#1 or the CSG cell#2, and a step in which, when the second measurement report is received, the radio base station eNB#A performs a predetermined process for reducing interference to the CSG cell#1 or the CSG cell#2.

The sixth characteristic of the present embodiment is that a mobile station UE includes a measurement report transmission unit 13 configured to transmit a measurement report including the reception quality and the PCI of a CSG cell#1 or a CSG cell#2, which is a neighbouring cell, to a radio base station eNB#A, which manages a cell#A in communication, and a notification unit 15 configured to, when a predetermined gap is notified from the radio base station eNB#A and then it is not possible to acquire the CGI of the CSG cell#1 or the CSG cell#2 by the predetermined gap, the mobile station UE notifies the radio base station eNB#A that it is not possible to acquire the CGI.

The seventh characteristic of the present embodiment is that a mobile station UE includes a measurement report transmission unit 13 configured to transmit a measurement report including the reception quality and the PCI of a CSG cell#1 or a CSG cell#2, which is a neighbouring cell, to a radio base station eNB#A, which manages a cell#A in communication, and a notification unit 15 configured to, when a predetermined gap and a predetermined interval are notified from the radio base station eNB#A and then it is not possible to acquire the CGI of the CSG cell#1 or the CSG cell#2 within the predetermined interval, the mobile station UE notifies the radio base station eNB#A that it is not possible to acquire the CGI.

The eighth characteristic of the present embodiment is that a radio base station eNB#A managing a cell#A includes a measurement configuration transmission unit 21 configured to, when a measurement report including the reception quality and the PCI of a CSG cell#1 or a CSG cell#2, which is a neighbouring cell, is transmitted by a mobile station UE in communication with a cell#A and when it is determined that it is probable that PCI according to the measurement report is used by a plurality of neighbouring cells, notify the mobile station UE of a predetermined gap and instruct the mobile station UE to notify the CGI of the CSG cell#1 or the CSG cell#2, and a handover processing unit 24 configured to, when a notification of a failure of the acquisition of the CGI of the CSG cell#1 or the CSG cell#2 for the predetermined gap is received from the mobile station UE, perform a predetermined process for reducing interference to the CSG cell#1 or the CSG cell#2.

The ninth characteristic of the present embodiment is that a radio base station eNB#A managing a cell#A includes a measurement configuration transmission unit 21 configured to, when a measurement report including the reception quality and the PCI of a CSG cell#1 or a CSG cell#2 , which is a neighbouring cell, is transmitted by a mobile station UE in communication with a cell#A, and when it is determined that it is probable that PCI according to the measurement report is used by a plurality of neighbouring cells, notify the mobile station UE of a predetermined gap and a predetermined interval and instruct the mobile station UE to notify the CGI of the CSG cell#1 or the CSG cell#2, and a handover processing unit 24 configured to, when a notification of a failure of the acquisition of the CGI of the CSG cell#1 or the CSG cell#2 within the predetermined interval is received from the mobile station UE, perform a predetermined process for reducing interference to the CSG cell#1 or the CSG cell#2.

The tenth characteristic of the present embodiment is that a radio base station eNB#A managing a cell#A includes a measurement configuration transmission unit 21 configured to, when a measurement report including the reception quality and the PCI of a CSG cell#1 or a CSG cell#2 , which is a neighbouring cell, is transmitted by a mobile station UE in communication with a cell#A, and when it is determined that it is probable that PCI according to the measurement report is used by a plurality of neighbouring cells, notify the mobile station UE of a predetermined gap and a predetermined interval and instruct the mobile station UE to notify the CGI of the CSG cell#1 or the CSG cell#2, and a handover processing unit 24 configured to, when the measurement report including the CGI of the CSG cell#1 or the CSG cell#2 is not received from the mobile station UE within the predetermined interval after the instruction, perform a predetermined process for reducing interference to the CSG cell#1 or the CSG cell#2.

The eleventh characteristic of the present embodiment is that a radio base station eNB#A managing a cell#A includes a measurement configuration transmission unit 21 configured to, when a measurement report including the reception quality and the PCI of a CSG cell#1 or a CSG cell#2, which is a neighbouring cell, is periodically transmitted by a mobile station UE in communication with a cell#A, and when it is determined that it is probable that PCI according to the measurement report is used by a plurality of neighbouring cells, notify the mobile station UE of a predetermined gap and instruct the mobile station UE to notify the CGI of the CSG cell#1 or the CSG cell#2, and a handover processing unit 24 configured to, when the measurement report including the PCI of the CSG cell#1 or the CSG cell#2 is received from the mobile station UE before the measurement report including the CGI of the CSG cell#1 or the CSG cell#2 is received after the instruction, perform a predetermined process for reducing interference to the CSG cell#1 or the CSG cell#2.

The twelfth characteristic of the present embodiment is that a radio base station eNB#A managing a cell#A includes a measurement configuration transmission unit 21 configured to, when it is determined that the reception quality of a CSG cell#1 or a CSG cell#2, which is a neighbouring cell, satisfies a first reporting condition and a first measurement report including the reception quality of the CSG cell#1 or the CSG cell#2 is transmitted by a mobile station UE in communication with the cell#A, notify the mobile station UE of a predetermined gap and instruct the mobile station UE to notify the CGI of the CSG cell#1 or the CSG cell#2, and a handover processing unit 24 configured to, when it is determined that the reception quality of the CSG cell#1 or the CSG cell#2 satisfies a second reporting condition and a second measurement report including the reception quality of the CSG cell#1 or the CSG cell#2 is transmitted by the mobile station UE, perform a predetermined process for reducing interference to the CSG cell#1 or the CSG cell#2.

In the first to fifth characteristics of the present embodiment, when the frequency f1 of the CSG cell#1 is the same as the frequency f1 of the cell#A, the predetermined process for reducing interference may include a process of allowing the mobile station UE to be handed over or redirected to a cell using another frequency

In the first to fifth characteristics of the present embodiment, when the frequency f2 of the CSG cell#2 is different from the frequency f1 of the cell#A, the predetermined process for reducing interference may include a process of allowing the mobile station UE to use the frequency f1 of the cell#A.

In the eighth to twelfth characteristics of the present embodiment, when the frequency f1 of the CSG cell#1 is the same as the frequency f1 of the cell#A, the predetermined process for reducing of interference may include a process of allowing the mobile station UE to be handed over or redirected to a cell using another frequency.

In the eighth to twelfth characteristics of the present embodiment, when the frequency f2 of the CSG cell#2 is different from the frequency f1 of the cell#A, the predetermined process for reducing interference may include a process of allowing the mobile station UE to use the frequency f1 of the cell#A.

It is noted that the operation of the above-described the mobile station UE or the radio base station eNB/HeNB may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE or the radio base station eNB/HeNB. Further, such a storage medium or a processor may be arranged, as a discrete component, in the mobile station UE or the radio base station eNB/HeNB.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method comprising:
a step in which a mobile station in communication with a first cell transmits a measurement report including reception quality and PCI of a second cell to a radio base station, which manages the first cell, the second cell being a neighbouring cell;
a step in which the radio base station managing the first cell instructs the mobile station to notify CGI of the second cell; and
a step in which, when it is not possible to acquire the CGI of the second cell, the mobile station notifies the radio base station that it is not possible to acquire the CGI.

2. The mobile communication method according to claim 1, wherein, when it is not possible to acquire the CGI of the second cell within a predetermined interval, the mobile station notifies the radio base station that it is not possible to acquire the CGI.

3. The mobile communication method according to claim 1 or 2, further comprising:
a step in which the radio base station managing the first cell performs a predetermined process for reducing interference to the second cell according to the notification from the mobile station.

4. A mobile communication method comprising:
a step in which a mobile station in communication with a first cell transmits a measurement report including reception quality and PCI of a second cell to a radio base station, which manages the first cell, the second cell being a neighbouring cell;
a step in which the radio base station managing the first cell instructs the mobile station to notify CGI of the second cell; and
a step in which, when a measurement report including the CGI of the second cell is not received from the mobile station within a predetermined interval after the instruction, the radio base station managing the first cell performs a predetermined process for reducing interference to the second cell.

5. A mobile communication method comprising:
a step in which a mobile station in communication with a first cell periodically transmits a measurement report including reception quality and PCI of a second cell to a radio base station, which manages the first cell, the second cell being a neighbouring cell;
a step in which the radio base station managing the first cell instructs the mobile station to notify CGI of the second cell; and
a step in which, when a measurement report including the PCI of the second cell is received from the mobile station before a measurement report including the CGI of the second cell is received after the instruction, the radio base station managing the first cell performs a predetermined process for reducing interference to the second cell.

6. A mobile communication method comprising:
a step in which, when reception quality of a second cell satisfies a first reporting condition, a mobile station in communication with a first cell transmits a first measurement report including the reception quality and PCI of the second cell to a radio base station, which manages the first cell, the second cell being a neighbouring cell;
a step in which, when the reception quality of the second cell satisfies a second reporting condition, the mobile station transmits a second measurement report including the reception quality and PCI of the second cell to the radio base station, which manages the first cell;
a step in which, when the first measurement report is received, the radio base station managing the first cell instructs the mobile station to notify CGI of the second cell; and
a step in which, when the second measurement report is received, the radio base station managing the first cell performs a predetermined process for reducing interference to the second cell.

7. A mobile station comprising:
a measurement report transmission unit configured to transmit a measurement report including reception quality and PCI of a second cell to a radio base station, which manages a first cell in communication, the second cell being a neighbouring cell; and
a notification unit configured to, when the radio base station managing the first cell has instructed the mobile station to notify CGI of the second cell and then it is not possible to acquire the CGI of the second cell, notify the radio base station managing the first cell that it is not possible to acquire the CGI.

8. The mobile station according to claim 7, wherein, when it is not possible to acquire the CGI of the second cell within a predetermined interval, the notification unit is configured to notify the radio base station managing the first cell that it is not possible to acquire the CGI.

9. A radio base station managing a first cell, comprising:
an instruction unit configured to, when a measurement report including reception quality and PCI of a second cell is transmitted by a mobile station in communication with the first cell, instruct the mobile station to notify CGI of the second cell, the second cell being a neighbouring cell; and
an execution unit configured to, when a notification of a failure of acquisition of the CGI of the second cell is received from the mobile station, perform a predetermined process for reducing interference to the second cell.

10. A radio base station managing a first cell, comprising:
an instruction unit configured to, when a measurement report including reception quality and PCI of a second cell is transmitted by a mobile station in communication with the first cell, instruct the mobile station to notify CGI of the second cell, the second cell being a neighbouring cell; and
an execution unit configured to, when a notification of a failure of acquisition of the CGI of the second cell within a predetermined interval is received from the mobile station, perform a predetermined process for reducing interference to the second cell.

11. A radio base station managing a first cell, comprising:
an instruction unit configured to, when a measurement report including reception quality and PCI of a second cell is transmitted by a mobile station in communication with the first cell, instruct the mobile station to notify CGI of the second cell, the second cell being a neighbouring cell; and
an execution unit configured to, when a measurement report including the CGI of the second cell is not received from the mobile station within a predetermined interval after the instruction, perform a predetermined process for reducing interference to the second cell.

12. A radio base station managing a first cell, comprising:
an instruction unit configured to, when a measurement report including reception quality and PCI of a second cell is periodically transmitted by a mobile station in communication with the first cell, instruct the mobile station to notify CGI of the second cell, the second cell being a neighbouring cell; and
an execution unit configured to, when a measurement report including the PCI of the second cell is received from the mobile station before a measurement report including the CGI of the second cell is received after the instruction, perform a predetermined process for reducing interference to the second cell.

13. A radio base station managing a first cell, comprising:
an instruction unit configured to, when it is determined that reception quality of a second cell satisfies a first reporting condition and a first measurement report including the reception quality of the second cell is transmitted by a mobile station in communication with the first cell, instruct the mobile station to notify CGI of the second cell, the second cell being a neighbouring cell; and
an execution unit configured to, when it is determined that the reception quality of the second cell satisfies a second reporting condition and a second measurement report including the reception quality of the second cell is transmitted by the mobile station, perform a predetermined process for reducing interference to the second cell.

14. The mobile communication method according to any one of claims 3 to 6, wherein, when a frequency of the second cell is equal to a frequency of the first cell, the predetermined process for reducing interference includes a process of allowing the mobile station UE to be handed over or redirected to a cell using another frequency.

15. The mobile communication method according to any one of claims 3 to 6, wherein, when a frequency of the second cell is different from a frequency of the first cell, the predetermined process for reducing interference includes a process of allowing the mobile station UE to use the frequency of the first cell.

16. The radio base station according to any one of claims 9 to 13, wherein, when a frequency of the second cell is equal to a frequency of the first cell, the predetermined process for reducing interference includes a process of allowing the mobile station UE to be handed over or redirected to a cell using another frequency.

17. The radio base station according to any one of claims 9 to 13, wherein, when a frequency of the second cell is different from a frequency of the first cell, the predetermined process for reducing interference includes a process of allowing the mobile station UE to use the frequency of the first cell.
